# EUROPÄISCHE PATENTSCHRIFT

(11) **EP 1 529 686 B1**
(45) Veröffentlichungstag und Bekanntmachung des Hinweises auf die Patenterteilung: **25.01.2006**
(21) Anmeldenummer: 04019478.9
(22) Anmeldetag: 17.08.2004
(51) Int. Cl.: B60Q 1/04, B60Q 1/26

(54) **Leuchteinheit für Fahrzeuge**
Vehicle lighting unit
Unité d'éclairage pour véhicule

(30) Priorität: 10.11.2003 DE 10352834
(43) Veröffentlichungstag der Anmeldung: 11.05.2005
(73) Patentinhaber: Hella KGaA Hueck & Co., 59552 Lippstadt (DE); Hella-Behr Fahrzeugsysteme GmbH, 59552 Lippstadt (DE); BMW AG, 80788 München (DE)
(72) Erfinder: Lachmayer, Roland, Dr., 59581 Warstein (DE); Sprenger, Winfried, Dipl.-Ing., 59555 Lippstadt (DE); Gödecker, Reiner, Dipl.-Ing., 59558 Lippstadt (DE); Schmidt, Ralf, Dipl.-Ing., 59302 Oelde (DE); Opperbeck, Guido, Dipl.-Ing., 59557 Lippstadt (DE); Braun, Dieter, Dipl.-Ing., 33378 Rheda-Wiedenbrück (DE); Kovacevic, Josip, 81377 München (DE); Adler, Stefan, 80809 München (DE)
(74) Vertreter: Ostermann, Thomas

(56) Entgegenhaltungen:
- EP-A- 0 816 750
- DE-A1- 3 402 274
- PATENT ABSTRACTS OF JAPAN Bd. 009, Nr. 231 (M-414), 18. September 1985 (1985-09-18) & JP 60 088645 A (NISSAN JIDOSHA KK), 18. Mai 1985 (1985-05-18)

## Beschreibung

Die Erfindung betrifft eine Leuchteinheit für Fahrzeuge mit einem Leuchtengehäuse, in dem lichttechnische Komponenten angeordnet sind, und mit einer eine Lichtaustrittsöffnung des Leuchtengehäuses abschließenden Abdeckscheibe, wobei ein Rand der Abdeckscheibe in einer Nut des Leuchtengehäuses befestigt ist.

Aus der DE 196 15 026 A1 ist eine Leuchteinheit für Fahrzeuge mit einem Leuchtengehäuse, das lichttechnische Komponenten wie z.B. einen Reflektor und eine Lichtquelle trägt, und mit einer die Lichtaustrittsöffnung des Leuchtengehäuses abschließenden Abdeckscheibe bekannt. Zur Befestigung der Abdeckscheibe ist ein Rand derselben in einer Nut des Leuchtengehäuses befestigt. Ein der Abdeckscheibe benachbartes Anschlussteil, wie beispielsweise eine Stoßfängerabdeckung oder ein Kotflügel, ist mit dem Leuchtengehäuse über Rastelemente unter Bildung einer Fuge zwischen dem Rand der Abdeckscheibe einerseits und dem Anschlussteil andererseits lösbar verbunden. Nachteilig an der bekannten Leuchteinheit ist, dass zwischen der Abdeckscheibe und dem Anschlussteil stets eine ausreichend große Fuge vorhanden sein muss, um den konstruktions- und lagebedingten Toleranzen der angrenzenden Bauteile gerecht zu werden.

Aufgabe der vorliegenden Erfindung ist es, eine Leuchteinheit für Fahrzeuge derart weiterzubilden, dass eine spalt- und toleranzärmere Fuge zwischen der Abdeckscheibe und dem Anschlussteil gewährleistet ist.

Zur Lösung dieser Aufgabe ist die Erfindung in Verbindung mit dem Oberbegriff des Patentanspruchs 1 dadurch gekennzeichnet, dass die Abdeckscheibe in einem Randbereich derselben eine Aufnahme für ein Randelement eines Anschlussteils aufweist.

Der besondere Vorteil der Erfindung besteht darin, dass eine direkte Verbindung zwischen der Abdeckscheibe und dem Anschlussteil gebildet wird, die eine Minimierung des Fugenspaltes ermöglicht. Grundgedanke der Erfindung ist es, eine direkte Befestigung der zueinander angrenzenden Bauteile der Fahrzeugaußenhaut vorzunehmen.

Nach einer bevorzugten Ausführungsform der Erfindung weist die Abdeckscheibe in einem Randbereich derselben eine Nut zur Aufnahme eines Randelementes des Anschlussteiles auf. Hierdurch weist das Anschlussteil eine definierte Relativlage zu der Abdeckscheibe auf, wobei durch Ausbildung der Nut bzw. des Randelementes die Fugenbreite vorgegeben werden kann. Durch eine direkte Anlage des Randelementes an einem Schenkel der Nut kann eine annähernd spaltfreie Fuge gebildet werden.

Nach einer Weiterbildung der Erfindung kann die Nut der Abdeckscheibe und/oder das Randelement des Anschlussteiles umlaufend bzw. durchgehend entlang der gemeinsamen Fugenlinie verlaufen. Hierdurch wird ein gleichmäßiges Fugenbild gewährleistet. Darüber hinaus kann bei Ausbildung der Nut bzw. des Randelementes als Rastelement eine definierte und sichere Verbindung zwischen der Abdeckscheibe und dem Anschlussteil gewährleistet sein.

Nach einer Weiterbildung der Erfindung ist die Nut der Abdeckscheibe als eine Zentriernut ausgebildet, so dass das Randelement bei der Montage des benachbarten Anschlussteils stets in eine definierte Einsteckposition verbringbar ist. Hierdurch kann eine konstante Fugenbildung erzielt werden, wobei Toleranzen der Bauteile ausgeglichen werden.

Nach einer Weiterbildung der Erfindung ist ein erster Schenkel der Abdeckscheibennut mit einem Hinterschnitt versehen, so dass lediglich eine partielle Verklipsung vorliegt. Vorteilhaft kann hierdurch auch einer während der Fahrt des Fahrzeuges hervorgerufener Geräuschentwicklung entgegengewirkt werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Vorderansicht einer Leuchteinheit,
- Figur 2: einen Vertikalschnitt durch die Leuchteinheit gemäß Figur 1 in einem Bereich, in dem eine Abdeckscheibe mit einem sich nach unten anschließenden Anschlussteil verbunden ist,
- Figur 3: eine vergrößerte Darstellung eines Verbindungsbereiches X in Figur 2 zwischen der Abdeckscheibe und dem Anschlussteil,
- Figur 4: einen Vertikalschnitt durch eine Leuchteinheit gemäß Figur 1 in einem Bereich, in dem eine Abdeckscheibe mit einem sich nach oben anschließenden Anschlussteil verbunden ist, und
- Figur 5: eine vergrößerte Darstellung eines Verbindungsbereiches Y in Figur 4 zwischen der Abdeckscheibe und dem angrenzenden Anschlussteil.

Eine Leuchteinheit 1 für Fahrzeuge, die vorzugsweise als ein Scheinwerfer ausgebildet ist, weist ein Leuchtengehäuse 2 auf, in dem lichttechnische Komponenten, wie beispielsweise eine nicht dargestellte Lichtquelle und ein nicht dargestellter Reflektor, angeordnet sind. Eine Lichtaustrittsöffnung des Leuchtengehäuses 2 ist durch eine glasklare Abdeckscheibe 3 abgeschlossen.

Zur Verbindung der Abdeckscheibe 3 mit dem Leuchtengehäuse 2 ist ein freies Ende 4 eines Randes 5 der Abdeckscheibe 3 entlang eines Teilumfangs derselben in einer Nut 6 des Leuchtengehäuses 2 in herkömmlicher Form befestigt. Dabei kann der Rand 5 über eine elastische Dichtung (Verbindung) in der Nut 6 gelagert sein, so dass eine Kompensation von Bauteil- bzw. Fügetoleranzen gewährleistet ist.

Nach der Erfindung erfolgt die Verbindung zwischen der Abdeckscheibe 3 und sich an dieselbe anschließenden Anschlussteilen 7 über direkt an dem Rand 5 der Abdeckscheibe 3 angeordnete Befestigungsmittel.

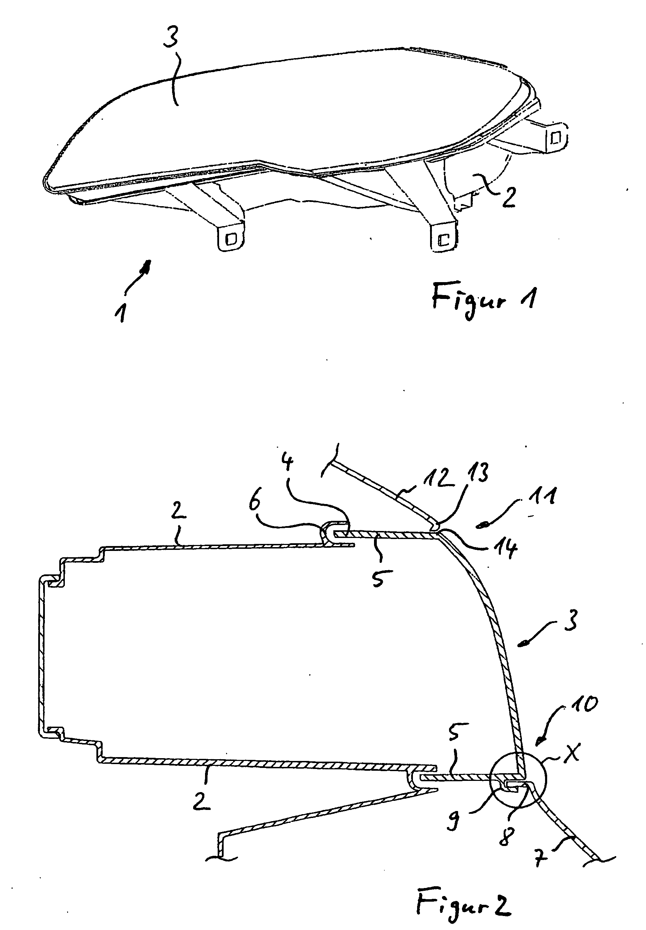

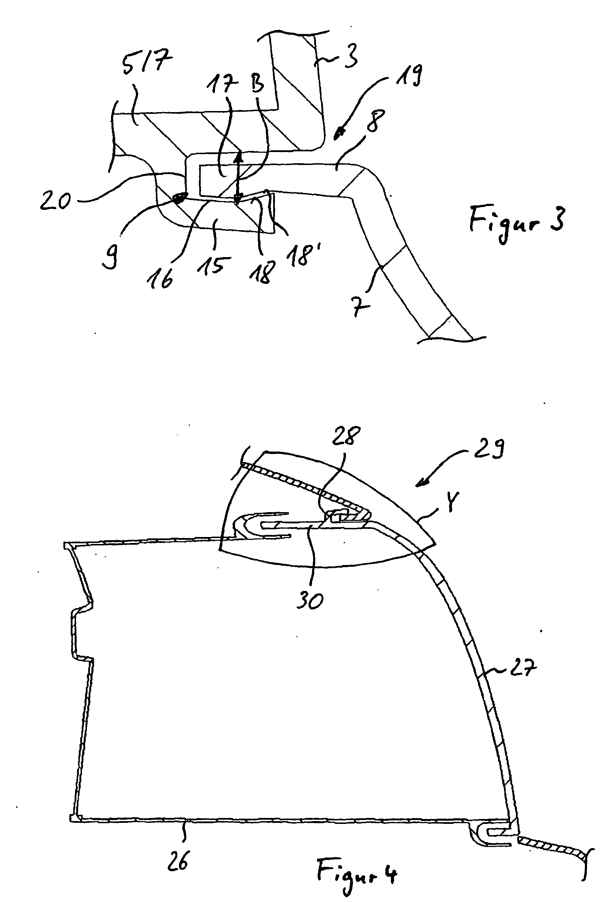

Nach einer ersten Ausführungsform der Leuchteinheit 1 gemäß den Figuren 2 und 3 ist als Anschlussteil 7 eine Stoßfängerabdeckung (Karosserieteil) mit einem Randelement 8 desselben in einer Aufnahmenut 9 des Randes 5 der Abdeckscheibe 3 gelagert. Dieser lösbare Befestigungsbereich X zwischen der Abdeckscheibe 3 und der Stoßfängerabdeckung 7 ist in einem fahrzeugaußenhautnahen Bereich angeordnet.

Zur Befestigung der Abdeckscheibe 3 an dem Leuchtengehäuse 2 erstreckt sich der Rand 5 der Abdeckscheibe 3 im wesentlichen geradlinig entgegen der Lichtaustrittsrichtung zu der Nutaufnahme 6 des Leuchtengehäuses 2 hingerichtet. Die Befestigung der Abdeckscheibe 3 mit dem Leuchtengehäuse 2 ist in einem fahrzeugaußenhautfernen Bereich angeordnet.

Wie aus Figur 2 zu ersehen ist, erstreckt sich die Aufnahmenut 9 der Abdeckscheibe 3 lediglich in einem unteren Bereich 10 der Abdeckscheibe 3. In einem oberen Bereich 11 der Abdeckscheibe 3 ist keine Nut vorgesehen, so dass ein benachbartes Anschlussteil 12 (Karosserieteil) mit einem freien Randelement 13 unmittelbar an einem abgewinkelten oberen Randabschnitt 14 der Abdeckscheibe 3 anliegt. Das obere Anschlussteil 12 ist als Motorhaube ausgebildet, so dass eine Verbindung mit der Abdeckscheibe 3 nicht erwünscht ist.

Wie besser aus Figur 3 zu ersehen ist, weist ein dem Anschlussteil 7 zugewandter und seitlich von dem Rand 5 abragender erster Schenkel 15 der Nut 9 einen Hinterschnitt 16 auf, so dass ein verbreitertes Ende 17 des Randelementes 8 rastend in die Nut 9 eingreifen kann. Sowohl der erste Schenkel 15 der Nut 9 als auch das verbreiterte Ende 17 des Randelementes 8 weisen eine abgeschrägte Rastfläche 18 bzw. 18' auf, so dass das untere Anschlussteil 7 auf einfache Weise rastend montiert werden kann und in dieser Raststellung selbsthaltend verbunden ist.

Die Nut 9 der Abdeckscheibe 3 weist eine solche Breite B auf, dass zum einen das Randelement 8 des Anschlussteils 7 lagesicher gehalten ist und zum anderen eine annähernd spaltfreie Fuge 19 zwischen der Abdeckscheibe 3 und dem Anschlussteil 7 gebildet wird. Vorteilhaft kann hierdurch eine definierte Fugenbildung vorgegebener Breite erzielt werden.

Nach einer nicht dargestellten Ausführungsform der Erfindung kann der erste Schenkel 15 auch eine konstante Breite aufweisen (ohne Hinterschnitt), so dass das Randelement 8 des Anschlussteils 7 ohne Vorspannung in derselben gelagert ist. Gegebenenfalls kann in einem Scheitelbereich 20 der Nut 9 eine Dichtung vorgesehen sein. Dadurch, dass das Randelement 8 des Anschlussteils 7 ohne Haltewirkung in der Nut 9 der Abdeckscheibe 3 eingesetzt ist, sind vorzugsweise an anderer Stelle Klammerelemente vorgesehen, die eine definierte klemmende Verbindung zwischen der Abdeckscheibe 3 und dem Leuchtengehäuse 2 bewirken. Das Klammerelement kann beispielsweise eine zusätzliche Nase am Fuße des Schenkels der Abdeckscheibe 3 und einen Schenkel des Leuchtengehäuses 2 umgreifen. Hierbei dient die Nut 9 der Abdeckscheibe 3 lediglich zur Aufnahme des Randelementes 8 des Anschlussteiles 3, ohne dass den Teilen in diesem Verbindungsbereich eine Hefestigungsfunktion zukommt.

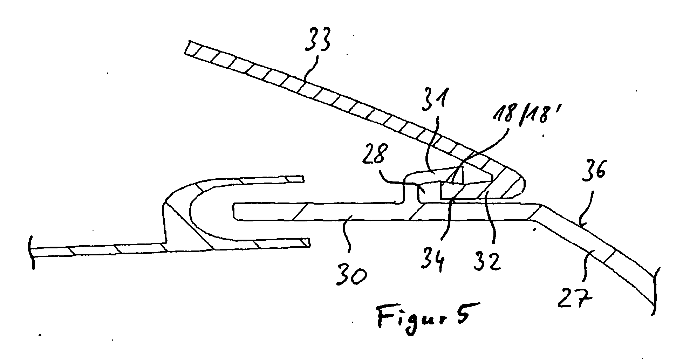

Nach einer weiteren Ausführungsform der Erfindung gemäß der Figuren 4 und 5 ist die Leuchteinheit 1 mit einem Leuchtengehäuse 26 und einer Abdeckscheibe 27 versehen, wobei die Abdeckscheibe 27 eine Nut 28 lediglich in einem oberen Bereich 29 der Abdeckscheibe 27 aufweist. Wie im vorhergehenden Ausführungsbeispiel ragt seitlich von einem Rand 30 der Abdeckscheibe 27 ein Schenkel 31 der Nut 28 derart ab, dass eine in Lichtaustrittsrichtung geöffnete Nut 28 gebildet wird. Der Schenkel 31 sowie ein Randelement 32 eines sich nach oben hin an die Abdeckscheibe 27 anschließenden Anschlussteils 33 bilden die Befestigungsmittel, die in gleicher Weise wie bei dem vorhergehenden Ausführungsbeispiel zu einer lösbaren Rastverbindung zwischen der Abdeckscheibe 27 und dem Anschlussteil 33 führen. Die übereinstimmenden Bau-/Funktionsteile der Befestigungsmittel sind daher mit den gleichen Bezugsziffern versehen.

Das Randelement 32 erstreckt sich hakenförmig entgegen der Lichtaustrittsrichtung, wobei es mit einem auf der dem Schenkel 31 abgewandten Seite erstreckenden Flächenabschnitt 34 unmittelbar auf einer Außenfläche 35 des Randes 30 der Abdeckscheibe 27 zur Anlage kommt. Diese flächige Anlage wird durch die klemmende Kraft des Schenkels 31 bewirkt, dessen endseitiger lichter Abstand zu der Außenfläche 35 im Ausgangszustand geringer ist als die Dicke des Randelementes 32 am Fuß der Rastfläche 18'.

Die Tiefe der Nut 28 bzw. die Länge des Randelementes 32 ist derart aufeinander abgestimmt, dass sich das Anschlussteil 33 quasi spaltfrei und bündig zu einer von außen sichtbaren Abdeckfläche 36 der Abdeckscheibe 27 erstreckt. Die Orientierung und Formgebung der Nut 28 bzw. des Randelementes 32 ist an die gewünschte Kontur der Abdeckscheibe 27 und des sich anschließenden Anschlussteils 33 angepasst. Im vorliegenden Ausführungsbeispiel können das Anschlussteil 33 und die Abdeckscheibe 27 bogenförmig ineinander übergehen. Es entsteht somit ein optisch homogener und einheitlicher Eindruck der zueinander benachbarten Bauteile 27, 33.

Alternativ kann das Anschlussteil 7, 33 auch eine Aufnahme (Nut) aufweisen, in die ein Randelement der Abdeckscheibe 3, 27 eingreift.

## Patentansprüche

1. Leuchteinheit für Fahrzeuge mit einem Leuchtengehäuse, in dem lichttechnische Komponenten angeordnet sind, und mit einer eine Lichtaustrittsöffnung des Leuchtengehäuses abschließenden Abdeckscheibe, wobei ein Rand der Abdeckscheibe in einer Nut des Leuchtengehäuses befestigt ist, **dadurch gekennzeichnet, dass** die Abdeckscheibe (3, 27) in einem Randbereich (10, 29) derselben eine Aufnahme (9, 28) für ein Randelement (8, 32) eines Anschlussteils (7, 33) aufweist.

2. Leuchteinheit nach Anspruch 1, **dadurch gekennzeichnet, dass** die Aufnahme der Abdeckscheibe (3, 27) als eine Nut (9, 28) ausgebildet ist, die umlaufend oder teilweise umlaufend verläuft und eine solche Breite (B) aufweist, dass das Randelement (8, 32) des Anschlussteils (7, 33) lagesicher gehalten ist.

3. Leuchteinheit nach Anspruch 1 oder 2, **dadurch gekennzeichnet, dass** das Randelement (8, 32) des Anschlussteils (7, 33) teilweise oder vollständig entlang einer durch die Abdeckscheibe (3, 27) und durch das benachbarte Anschlussteil (7, 33) gebildeten gemeinsamen Fugenlinie (19) erstreckt.

4. Leuchteinheit nach einem der Ansprüche 1 bis 3, **dadurch gekennzeichnet, dass** die Nut (9, 28) der Abdeckscheibe (3, 27) und das Randelement (8, 32) des Anschlussteils (7, 33) rastend und/oder selbsthaltend miteinander verbunden sind.

5. Leuchteinheit nach einem der Ansprüche 1 bis 4, **dadurch gekennzeichnet, dass** die Nut (9, 28) der Abdeckscheibe (3, 27) und/oder das Randelement (8, 32) des Anschlussteils (7, 33) derart ausgebildet sind, dass das Randelement (8, 32) nach dem Einstecken in die Nut (9, 28) eine vorgegebene Montageposition einnimmt.

6. Leuchteinheit nach einem der Ansprüche 1 bis 5, **dadurch gekennzeichnet, dass** die Nut (9, 28) der Abdeckscheibe (3, 27) einen seitlich abragenden Schenkel (15, 31) mit einem Hinterschnitt (16) aufweist, derart, dass das Randelement (8, 32) des Anschlussteils (7, 33) im wesentlichen durch Verklipsung in der Nut (9, 28) der Abdeckscheibe (3, 27) gehalten ist.

7. Leuchteinheit nach einem der Ansprüche 1 bis 6, **dadurch gekennzeichnet, dass** die Tiefe und/oder die Kontur der Nut (9, 28) der Abdeckscheibe (3, 27) und/oder die Kontur des Wandelementes (8, 32) des Anschlussteils (7, 33) derart ausgebildet sind, dass sich die unmittelbar an der Nut (9, 28) und dem Randelement (8, 32) anschließende Abdeckfläche (36) der Abdeckscheibe (3, 27) bzw. ein Flächenabschnitt des Anschlussteils (7, 33) bündig zueinander erstrecken.

8. Leuchteinheit nach einem der Ansprüche 1 bis 7, **dadurch gekennzeichnet, dass** in einem Scheitelbereich (20) der Nut (9, 28) eine Dichtung angeordnet ist.

9. Leuchteinheit nach einem der Ansprüche 1 bis 8, **dadurch gekennzeichnet, dass** der Rand (5) der Abdeckscheibe (3) über eine elastische Dichtung in der Nut (6) des Leuchtengehäuses (2) gelagert ist.

10. Leuchteinheit nach einem der Ansprüche 1 bis 9, **dadurch gekennzeichnet, dass** die Abdeckscheibe (3, 27) und/oder das Leuchtengehäuse (2) in einem zueinandergekehrten Randbereich derart ausgebildet sind, dass ein zusätzliches Klammerelement angreifbar ist zur lösbaren Verbindung der Abdeckscheibe (3) mit dem Leuchtengehäuse (2).

## Claims

1. Vehicle lighting unit comprising a lamp casing in which light system components are arranged, and a cover lens covering up the light emission opening of the lamp casing and provided with a marginal edge secured in a groove of said lamp casing, **characterized by** the fact that the cover lens (3, 27) has a receiving member (9, 28) in a marginal edge portion (10, 29) for a marginal edge element (8, 32) of a connecting component (7, 33) to engage into.

2. Lighting unit according to Claim 1, **characterized by** the fact that the receiving member of the cover lens (3, 27) is provided in form of a groove (9, 28) which extends circumferentially in full or in part and which has a width B which ensures that the marginal edge element (8, 32) of a connecting element (7, 33) is dependably retained in position.

3. Lighting unit according to Claim 1 or 2, **characterized by** the fact that the marginal edge element (8, 32) of the connecting component (7, 33) partly or completely extends along a common joint line (19) formed by the cover lens (3, 27) and the adjoining connecting component (7, 33).

4. Lighting unit according to any of the preceding Claims 1 to 3, **characterized by** the fact that the groove (9, 28) of the cover lens (3, 27) and the marginal edge element (8, 32) of the connecting component (7, 33) are connected to each other in a snap-action or self-holding mode.

5. Lighting unit according to any of the preceding Claims 1 to 4, **characterized by** the fact that the groove (9, 28) of the cover lens (3, 27) and/or the marginal edge element (8, 32) of the connecting component (7, 33) is formed such that the marginal edge element (8, 32) takes a predetermined mounting position after it has been inserted into the groove (9, 28).

6. Lighting unit according to any of the preceding Claims 1 to 5, **characterized by** the fact that the groove (9, 28) of the cover lens (3, 27) has a sideways protruding leg (15, 31) with an undercut (16) such that the marginal edge element (8, 32) of the connecting component (7, 33) is retained in the groove (9, 28) of the cover lens (3, 27) substantially due to snap action.

7. Lighting unit according to any of the preceding Claims 1 to 6, **characterized by** the fact that the depth and/or the contour of the groove (9, 28) of the cover lens (3, 27) and/or the contour of the marginal edge element (8, 32) of the connecting component (7, 33) are formed such that a covering surface (36) of the cover lens (3, 27) directly adjacent to the groove (9, 28) and the marginal edge element (8, 32) and/or a surface area portion of the connecting component (7, 33) extend in a flush relation to each other.

8. Lighting unit according to any of the preceding Claims 1 to 7, **characterized by** the fact that a seal is arranged in a crest area (20) of the groove (9, 28).

9. Lighting unit according to any of the preceding Claims 1 to 8, **characterized by** the fact that the marginal edge (5) of the cover lens (3) is arranged in the groove (6) of the lamp casing (2) via a flexible seal.

10. Lighting unit according to any of the preceding Claims 1 to 9, **characterized by** the fact that the cover lens (3, 27) and/or the lamp casing (2) are so formed in their opposing marginal edge portions that an additional clamp element is allowed to engage for establishing a detachable connection of the cover lens (3) with the lamp casing (2).

## Revendications

1. Unité d'éclairage pour véhicules automobiles, avec un boîtier d'appareil d'éclairage, dans lequel sont agencés des composants techniques d'éclairage, et avec une plaque de recouvrement fermant une ouverture de sortie de lumière du boîtier de lampe, un bord de la plaque de recouvrement étant fixé dans une rainure du boîtier de lampe, **caractérisée en ce que** la plaque de recouvrement (3, 27) présente, dans une zone marginale (10, 29) de celle-ci, un réceptacle (9, 28) pour un élément marginal (8, 32) d'une pièce de raccordement (7, 33).

2. Unité d'éclairage selon la revendication 1, **caractérisée en ce que** le réceptacle de la plaque de recouvrement (3, 27) est réalisé en tant que rainure (9, 28) qui s'étend sur la périphérie, ou sur une partie de la périphérie et présente une largeur (B) telle que l'élément marginal (8, 32) de la pièce de raccordement (7, 33) est maintenu positionné de manière fiable.

3. Unité d'éclairage selon la revendication 1 ou 2, **caractérisé en ce que** l'élément marginal (8, 32) de la pièce de raccordement (7, 33) s'étend partiellement ou entièrement le long d'une ligne de guidage commune, formée par la plaque de recouvrement (3, 27) et par la pièce de raccordement (7, 32) voisine.

4. Unité d'éclairage selon l'une des revendications 1 à 3, **caractérisée en ce que** la rainure (9, 28) de la plaque de recouvrement (3, 27) et l'élément marginal (8, 32) de la pièce de raccordement (7, 33) sont reliés ensemble par enclenchement et / ou par auto-retenue.

5. Unité d'éclairage selon l'une des revendications 1 à 4, **caractérisée en ce que** la rainure (9, 28) de la plaque de recouvrement (3, 27) et / ou l'élément marginal (8, 32) de la pièce de raccordement (7, 33) sont conçus de telle manière que ledit élément marginal (8, 32), après insertion dans la rainure (9, 28), prend une position de montage prédéterminée.

6. Unité d'éclairage selon l'une des revendications 1 à 5, **caractérisée en ce que** la rainure (9, 28) de la plaque de recouvrement (3, 27) présente une aile (15, 31) faisant saillie latéralement, avec une contre-dépouille? (16), de sorte que l'élément marginal (8, 32) de la pièce de raccordement (7, 33) est essentiellement maintenu par clipsage dans la rainure (9, 28) de la plaque de recouvrement (3, 27).

7. Unité d'éclairage selon l'une des revendications 1 à 6, **caractérisée en ce que** la profondeur et / ou le contour de la rainure (9, 28) de la plaque de recouvrement (3, 27) et / ou le contour de la paroi (8, 32) de la pièce de raccordement (7, 33) sont conçus de telle manière que la surface de recouvrement (36) de la plaque de recouvrement (3, 27), directement raccordée à la rainure (9, 28) et à l'élément marginal (8, 32) respectivement une section de la surface de la pièce de raccordement (7, 33) s'étendent.

8. Unité d'éclairage selon l'une des revendications 1 à 7, **caractérisée en ce que**, dans une zone de sommet (20) de la rainure (9, 28), est agencée une garniture d'étanchéité.

9. Unité d'éclairage selon l'une des revendications 1 à 8, **caractérisée en ce que** le bord (5) de la plaque de recouvrement (3) est logé dans la rainure (6) du boîtier de lampe (2), avec l'intervention d'une garniture d'étanchéité élastique.

10. Unité d'éclairage selon l'une des revendications 1 à 9, **caractérisée en ce que** la plaque de recouvrement (3, 27) et /ou le boîtier de lampe (2) sont conçus, dans une section marginale, dans laquelle ils sont orientés l'un vers l'autre, de telle manière qu'un élément d'accrochage supplémentaire peut être engagé pour relier, de manière amovible, la plaque de recouvrement (3) au boîtier de lampe (2).
